# EUROPÄISCHE PATENTSCHRIFT

(11) **EP 0 489 707 B1**
(45) Veröffentlichungstag und Bekanntmachung des Hinweises auf die Patenterteilung: **30.11.1994**
(21) Anmeldenummer: 91890296.6
(22) Anmeldetag: 04.12.1991
(51) Int. Cl.: A01K 1/01

(54) **Druckentmistungsanlage**
Pressure operated manure evacuation device
Dispositif d'evacuation du fumier par pression

(30) Priorität: 04.12.1990 AT 2451/90
(43) Veröffentlichungstag der Anmeldung: 10.06.1992
(73) Patentinhaber: Brunnthaller, Erwin, A-4624 Pennewang (AT)
(72) Erfinder: Brunnthaller, Erwin, A-4624 Pennewang (AT)
(74) Vertreter: Müllner, Erwin, Dr.

(56) Entgegenhaltungen:
- EP-A- 0 025 361
- WO-A-84/02055
- CA-A- 1 053 171
- DE-A- 3 705 068
- US-A- 4 632 405

## Beschreibung

Die vorliegende Erfindung betrifft eine Druckentmistungsanlage mit einer Druckkammer, deren Querschnitt sich in Förderrichtung in einer Dimension verjüngt, und einem, vorzugsweise hydraulisch betätigbaren, in der Druckkammer verschiebbaren Druckkolben.

Bei hydraulischen Druckentmistungsanlagen wird der Mist durch ein Förderrohr, das an die Druckkammer anschließt, z.B. 400 mm Durchmesser hat und normalerweise bis zu 10 m, fallweise aber auch bis zu 100 m lang ist, zu einer Düngerstätte gefördert. Ein Problem, das dabei auftritt, ist, daß die Einlauföffnung für den Misteinwurf in die Druckkammer in der Praxis mindestens 500 mm breit sein muß. (Der Mist kann z.B. durch ein Schiebersystem durch die Einlauföffnung gefördert werden.) Dadurch ergibt sich aber zwangsläufig, daß die Druckkammer im Bereich der Einlauföffnung einen größeren Querschnitt hat als im Bereich des Anschlusses an das Förderrohr, sodaß sich die Druckkammer verjüngen muß.

Diese Verjüngung gibt nun bei der Förderung von Mist Schwierigkeiten, weil sich Mist nicht wie eine niedrig viskose Flüssigkeit verhält. Verwendet man einen Druckkolben, der sich nur in dem Abschnitt der Druckkammer mit großem Querschnitt hin- und herbewegt, so entstehen - vor allem bei höherem Strohanteil im Mist - gewaltige Kraftverluste im Bereich der Verjüngung der Druckkammer. Eine derartige Anlage wird vom Anmelder unter dem Namen "Mistex Extrem" erzeugt. Diese Anlage ist für lange Rohrleitungen geeignet, weil große Zylinder mit viel Kraft eingesetzt werden; umso problematischer sind die Kraftverluste im Bereich der Verjüngung der Druckkammer.

Der Anmelder erzeugt weiters Anlagen, die unter der Bezeichnung MISTEX I bzw. MISTEX II angeboten werden. Bei dieser Anlage hat die Druckkammer rechteckigen Querschnitt, und zwar sowohl im Bereich vor als auch im Bereich nach der Verjüngung als auch im Bereich der Verjüngung. Der Querschnitt verjüngt sich nur in einer Dimension, und zwar verläuft nur eine der vier Seitenwände in einem gewissen Bereich schräg.

Als Druckkolben ist eine Platte vorgesehen, die auf der Seite, die der schrägen Seitenwand gegenüberliegt, schwenkbar auf einer Hydraulikkolbenstange befestigt ist. Bei Verschieben der Hydraulikkolbenstange wird somit auch die Platte verschoben, wobei sie im Bereich der Verjüngung gleichzeitig verschwenkt wird, sodaß sie immer den Querschnitt der Druckkammer abdichtet (vergl. auch: WO-A-8402055).

Auf diese Weise treten zwar weniger Kraftverluste auf, jedoch ist dieser Mechanismus nur für geringe Kräfte geeignet; das Förderrohr darf daher höchstens 10 m lang sein. Ein weiterer Nachteil besteht darin, daß diese Anlage nur liegend und nicht stehend betrieben werden kann, weil sonst die schwenkbare Platte immer parallel zur Achse der Druckkammer herunterhängt und deren Querschnitt nicht abdeckt.

Es ist Aufgabe der vorliegenden Erfindung, diese Nachteile zu beseitigen.

Diese Aufgabe wird durch eine Druckentmistungsanlage der eingangs erwähnten Art erfindungsgemäß dadurch gelöst, daß der Druckkolben aus einem Grundkörper und einer in bezug auf den Grundkörper aus- und einschiebbaren Schieberplatte besteht, wobei der Druckkolben bei ausgeschobener Schieberplatte den größeren Druckkammerquerschnitt ausfüllt und bei eingeschobener Schieberplatte den kleineren Druckkammerquerschnitt ausfüllt.

Gemäß der Erfindung ist der Druckkolben also zweigeteilt: er besteht aus einem Grundkörper, der in der Druckkammer verschiebbar ist (vorzugsweise durch eine Hydraulik), und aus einer Schieberplatte. Der Querschnitt der Druckkammer wird zum überwiegenden Teil vom Grundkörper ausgefüllt; die Schieberplatte braucht nur die Differenz der Querschnitte abzudecken. Diese Konstruktion ist damit stärker belastbar als die oben erwähnten Druckentmistungsanlagen MISTEX I und MISTEX II, wo eine schwenkbare Platte den gesamten Querschnitt der Druckkammer abdecken muß.

Die Schieberplatte wird automatisch durch die schräge Seitenwand der Druckkammer eingeschoben, wenn der Druckkolben vorgeschoben wird. Es ist dabei zweckmßig, wenn die Schieberplatte in bezug auf die Achse der Druckkammer schräg ausschiebbar ist, sodaß beim Einschieben der Schieberplatte deren Vorderkante eine Bewegungskomponente entgegen der Förderrichtung hat. Dadurch tritt weniger Reibung in der Führung der Schieberplatte und zwischen der Schieberplatte und der schrägen Seitenwand der Druckkammer auf.

Vorzugsweise ist eine Zwangsführung zum Ausschieben der Schieberplatte beim Zurückziehen des Druckkolbens vorgesehen. Diese Zwangsführung kann aus einer an der Schieberplatte seitlich angebrachten Dreieckskulisse und einem an der entsprechenden Seitenwand der Druckkammer angebrachten Führungsbolzen bestehen. Auf diese Weise wird ein sicheres Ausschieben der Schieberplatte bewirkt.

Schließlich ist es zweckmäßig, wenn am Ende des Kolbenhubes in der Druckkammer ein Keil zum weiteren Einschieben der Schieberplatte in den Grundkörper vorgesehen ist. Dadurch wird am Ende des Hubes - d.h. unmittelbar bevor der Druckkolben zurückgezogen wird - die Schieberplatte noch weiter eingeschoben, sodaß der Druckkolben beim Zurückziehen nicht mehr dicht an der Druckkammer anliegt und so die Entstehung eines Unterdrucks verhindert wird.

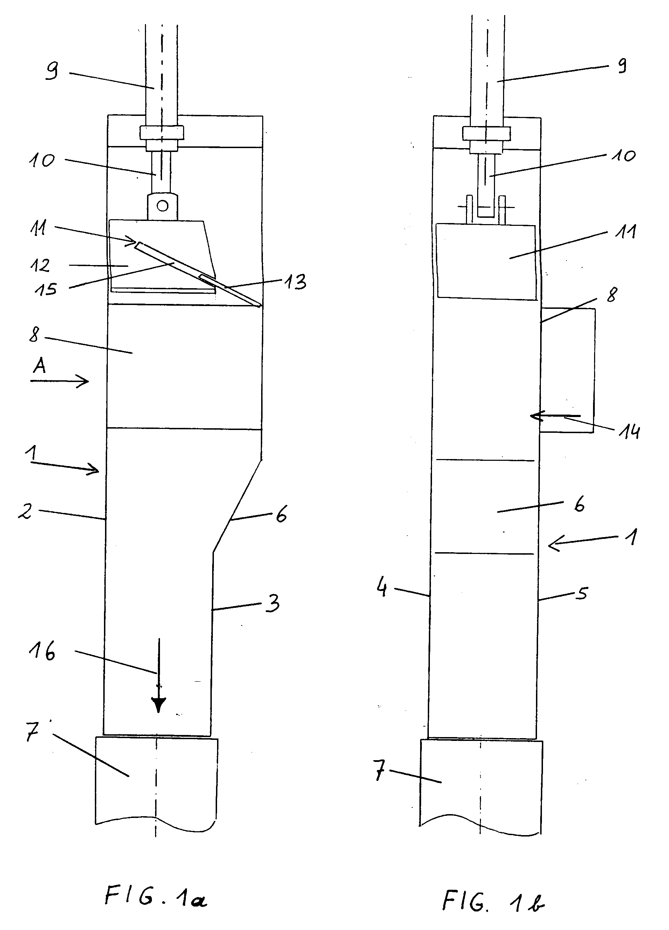

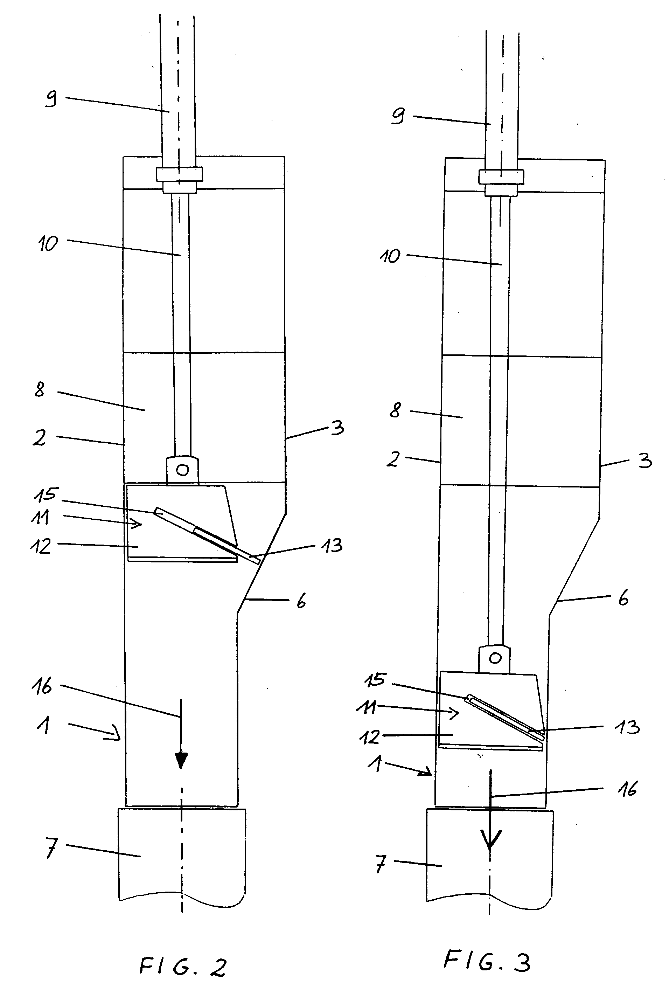

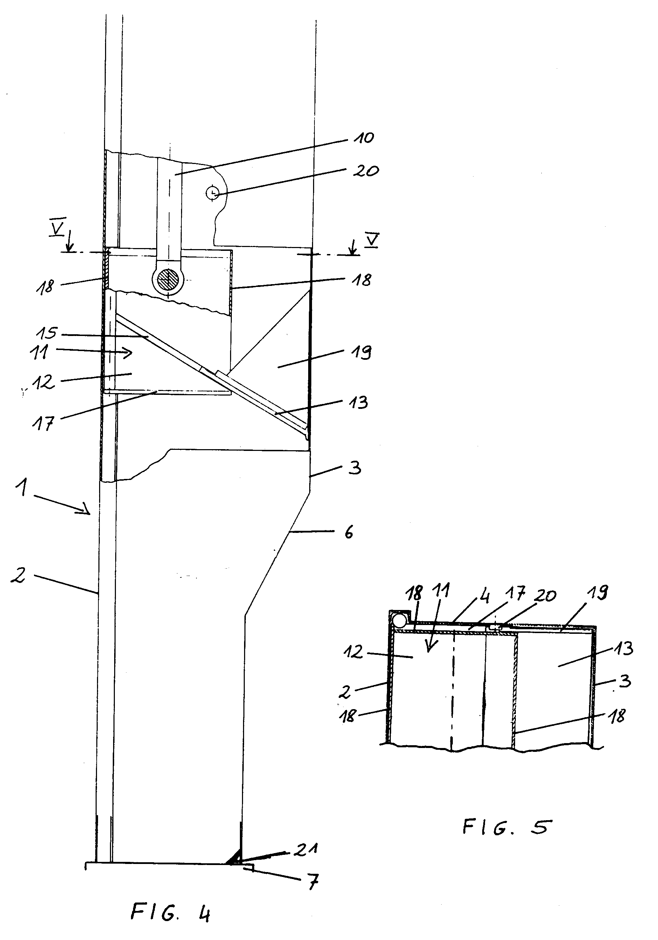

Anhand der beiliegenden Zeichnungen wird die Erfindung näher erläutert. Es zeigt Fig. 1a eine schematische Darstellung einer Druckentmistungsanlage gemäß der Erfindung bei zurückgezogenem Druckkolben; Fig. 1b eine Ansicht nach Pfeil A in Fig. 1a; Fig. 2 dasselbe wie Fig. 1a, jedoch bei halb vorgeschobenem Druckkolben; Fig. 3 dasselbe wie Fig. 1a, jedoch bei voll vorgeschobenem Druckkolben; Fig. 4 dasselbe wie Fig. 1a, jedoch in größerem Detail; und Fig. 5 einen Schnitt entlang der Linie V-V in Fig. 4.

Wie aus den Fig. 1a und 1b ersichtlich ist, weist die Druckentmistungsanlage eine Druckkammer 1 auf, die aus vier Seitenwänden 2, 3, 4 und 5 besteht. Eine dieser Seitenwände, nämlich 3, hat einen schrägen Abschnitt 6, sodaß sich der Querschnitt der Druckkammer 1 in einer Dimension verjüngt. Der Querschnitt der Druckkammer 1 ist dadurch oben rechteckig und unten quadratisch. Diese Querschnittsform ist aber nicht die einzig mögliche: der Querschnitt könnte auch U-förmig oder oval sein.

An dem Ende mit dem kleineren, quadratischen Querschnitt ist ein Förderrohr 7 angeschlossen, das einen runden Querschnitt hat. Damit der Mist problemlos aus der Druckkammer 1 in das Förderrohr 7 gelangen kann, darf die Diagonale der Druckkammer 1 höchstens so groß wie der Durchmesser des Förderrohres 7 sein.

Am anderen Ende der Druckkammer 1 ist ein Hydraulikzylinder 9 mit einer Hydraulikkolbenstange 10 vorgesehen. An deren Ende ist ein Druckkolben 11 befestigt, sodaß dieser hydraulisch verschiebbar ist.

Im Bereich des größeren, rechteckigen Querschnitts der Druckkammer 1 befindet sich eine Einlauföffnung 8 in der Seitenwand 5 der Druckkammer 1. Durch diese Öffnung kann Mist in die Druckkammer gefördert werden, wenn sich der Druckkolben in seiner obersten Stellung (in Fig. 1a und b gezeigt) befindet. Dies ist durch den Pfeil 14 in Fig. 1b angedeutet.

Erfindungsgemäß besteht der Druckkolben 11 aus zwei Teilen, nämlich aus dem Grundkörper 12 und aus der Schieberplatte 13. Die Schieberplatte 13 ist im Grundkörper 12 in Schlitzen 15 geführt, sodaß sie verschiebbar ist. Die Schlitze 15 sind dabei nicht normal, sondern schräg zur Längsachse der Druckkammer 1 angeordnet; dadurch hat die Vorderkante der Schieberplatte 13, d.i. rechts in Fig. 1a, beim Einschieben der Schieberplatte 13 in den Grundkörper 12 eine Bewegungskomponente entgegen der Förderrichtung 16.

Im folgenden wird auf die detaillierteren Fig.4 und 5 bezug genommen. Wie man sieht, ist der Grundkörper 12 hohl; er ist aus Platten zusammengesetzt, wobei die untere Platte 17 die Breite der Druckkammer 1 aufweist, während die seitlichen Platten 18 von den Seitenwänden 4, 5 einen gewissen Abstand aufweisen, sodaß ein Spalt gebildet wird. Auf der Schieberplatte 13 ist eine Dreieckskulisse 19 angebracht, die, wenn die Schieberplatte 13 eingeschoben wird in diesen Spalt hineingleitet. An der entsprechenden Seitenwand 4 ist ein Führungsbolzen 20 vorgesehen, der mit der Dreieckskulisse 19 zusammenwirkt.

Die Schieberplatte 13 hat dieselbe Breite wie die untere Platte 17 und liegt an dieser an, sodaß die untere Platte 17 und die Schieberplatte 13 gemeinsam die Druckkammer 1 dicht abschließen. Selbstverständlich ist es möglich, die Stabilität des Grundkörpers 12 durch Verstärkungselemente, die zwischen den Platten eingebaut sind, zu erhöhen.

Am unteren Ende des Hubes des Druckkolbens 11 ist ein Keil 21 vorgesehen, der die Schieberplatte 13 noch weiter hineindrückt.

Die erfindungsgemäße Druckentmistungsanlage funktioniert wie folgt:
Zunächst ist der Druckkolben 11 in der obersten Stellung (siehe Fig. 1a, 1b), wobei die Schieberplatte 13 ausgeschoben ist. In dieser Stellung ist die Einlauföffnung 8 frei, sodaß Mist in die Druckkammer 1 gefördert werden kann. Wenn genug Mist in die Druckkammer 1 gelangt ist, wird der Hydraulikkolben 9 mit Druck beaufschlagt, sodaß die Hydraulikkolbenstange 10 hinausgeschoben und der Druckkolben 11 hinuntergedrückt wird. Zunächst ist der Druck in der Druckkammer 1 noch nicht hoch. Beim weiteren Absenken des Druckkolbens 11 kommt die vordere Kante der Schieberplatte 13 am schrägen Abschnitt 6 der Seitenwand 3 zum Anliegen (siehe Fig. 2) und wird durch die Absenkbewegung des Druckkolbens 11 von dieser eingeschoben. Der Druck ist nun schon etwas höher: der Mist wird vorgepreßt. Wenn dann der Druckkolben 11 in den Bereich der Druckkammer 1 mit dem kleineren, quadratischen Querschnitt gelangt (siehe Fig. 3), ist die Schieberplatte 13 fast ganz eingeschoben, sodaß auf sie nur relativ geringe Kräfte wirken; der Druckkolben ist somit genauso stark belastbar, wie ein einstückiger, fester Druckkolben. Nun erreicht der Drcuk seinen maximalen Wert, und der eigentliche Preß- und Fördervorgang findet statt.

Am Ende der Absenkbewegung kommt die Schieberplatte 13 mit dem Keil 21 (siehe Fig. 4) in Berührung und wird dadurch noch um z.B. 15 oder 20 mm eingeschoben. Nun wird der Druckkolben 11 zurückbewegt, wobei er - weil die Schieberplatte 13 ganz eingeschoben ist - nicht mehr dicht anliegt, sodaß Luft vorbeiströmen und kein Unterdruck entstehen kann.

Gegen Ende der Aufwärtsbewegung kommt nun die Dreieckskulisse 19 in Anschlag mit dem Führungsbolzen 20. Bei weiterer Aufwärtsbewegung wird dann die Schieberplatte 13 durch diese Zwangsführung ausgeschoben, bis sie die Seitenwand 3 wieder berührt. Die Anlage ist nun für einen wieteren Arbeitszyklus bereit.

## Patentansprüche

1. Druckentmistungsanlage mit einer Druckkammer (1), deren Querschnitt sich in Förderrichtung in einer Dimension verjüngt, und einem, vorzugsweise hydraulisch betätigbaren, in der Druckkammer (1) verschiebbaren Druckkolben (11), dadurch gekennzeichnet, daß der Druckkolben (11) aus einem Grundkörper (12) und einer in bezug auf den Grundkörper (12) aus- und einschiebbaren Schieberplatte (13) besteht, wobei der Druckkolben (11) bei ausgeschobener Schieberplatte (13) den größeren Druckkammerquerschnitt ausfüllt und bei eingeschobener Schieberplatte (13) den kleineren Druckkkammerquerschnitt ausfüllt.

2. Druckentmistungsanlage nach Anspruch 1, dadurch gekennzeichnet, daß die Schieberplatte (13) in bezug auf die Achse der Druckkammer (1) schräg ausschiebbar ist, sodaß beim Einschieben der Schieberplatte (13) deren Vorderkante eine Bewegungskomponente entgegen der Förderrichtung (16) hat.

3. Druckentmistungsanlage nach Anspruch 1 oder 2, dadurch gekennzeichnet, daß eine Zwangsführung zum Ausschieben der Schieberplatte (13) beim Zurückziehen des Druckkolbens (11) vorgesehen ist.

4. Druckentmistungsanlage nach Anspruch 3, dadurch gekennzeichnet, daß die Zwangsführung aus einer an der Schieberplatte (13) seitlich angebrachten Dreieckskulisse (19) und einem an der entsprechenden Seitenwand (4) der Druckkammer (1) angebrachten Führungsbolzen (20) besteht.

5. Druckentmistungsanlage nach einem der Ansprüche 1 bis 4, dadurch gekennzeichnet, daß am Ende des Kolbenhubes in der Druckkammer (1) ein Keil (21) zum weiteren Einschieben der Schieberplatte (13) in den Grundkörper (12) vorgesehen ist.

## Claims

1. Pressure-operated muck removal installation with a pressure chamber (1) whose cross-section tapers in one dimension in the direction of conveyance, and a pressure piston (11), preferably hydraulically operated, which is displaceable in the pressure chamber (1), **characterised** in that the pressure piston (11) consists of a main body (12) and a slide plate (13) which can be pushed in and out in relation to the main body (12), in which the pressure piston (11) occupies the greater pressure chamber cross-section when the slide plate (13) is pushed out and smaller pressure chamber cross-section when the slide plate (13) is pushed in.

2. Pressure-operated muck removal installation according to claim 1, **characterised** in that the slide plate (13) can be pushed out at an angle to the axis of the pressure chamber (1) so that when the slide plate (13) is pushed in, the front edge of the slide plate (13) has a component of motion opposite to the conveyance direction (16).

3. Pressure-operated muck removal installation according to claim 1 or 2, **characterised** in that a forced guide is provided for pushing out the slide plate (13) as the pressure piston (11) withdraws.

4. Pressure-operated muck removal installation according to claim 3, **characterised** in that the forced guide consists of a triangular connecting link (19) attached to the side of the slide plate (13) and a guide bolt (20) attached to the corresponding side wall (4) of the pressure chamber (1).

5. Pressure-operated muck removal installation according to one of the claims 1 to 4, **characterised** in that for pushing the slide plate (13) further into the main body (12) a wedge (21) is provided at the end of the piston stroke in the pressure chamber (1).

## Revendications

1. Installation de décharge de fumier sous pression comprenant une chambre de pressage (1) dont la section transversale se rétrécit selon une dimension dans la direction de propulsion, et un piston de pressage (11), de préférence susceptible d'être actionné hydrauliquement et de coulisser dans la chambre de pressage (1), caractérisée en ce que le piston de pressage (11) se compose d'un corps de base (12) et d'une plaque coulissante (13) susceptible de coulisser en sortant et en rentrant sur le corps de base (12), le piston de pressage (11) remplissant respectivement la plus grande section transversale de la chambre de pressage lorsque la plaque coulissante (13) est sortie et la plus petite section transversale de la chambre de pressage lorsque la plaque coulissante (13) est rentrée.

2. Installation de décharge de fumier sous, pression selon la revendication 1, caractérisée en ce que la plaque coulissante (13) est susceptible de coulisser en position inclinée par rapport à l'axe de la chambre de pressage (1), de sorte qu'au cours de la rentrée par coulissement de la plaque coulissante (13), son arête avant présente une composante de déplacement opposée à la direction de propulsion (16).

3. Installation de décharge de fumier sous pression selon la revendication 1 ou 2, caractérisée en ce qu'un guidage forcé pour le coulissement vers la sortie de la plaque coulissante (13) est prévu au cours du retrait du piston de pressage (11).

4. Installation de décharge de fumier sous pression selon la revendication 3, caractérisée en ce que le guidage forcé est constitué d'une coulisse triangulaire (19) rapportée latéralement sur la plaque coulissante (13) et d'une cheville de guidage (20) rapportée sur la paroi latérale correspondante (4) de la chambre de pressage (1).

5. Installation de décharge de fumier sous pression selon l'une des revendications 1 à 4, caractérisée en ce qu'il est prévu à l'extrémité de la course de piston dans la chambre de pressage (1), une cale (21) ou un coin pour enfoncer de façon supplémentaire la plaque coulissante (13) dans le corps de base (12).
